# EUROPEAN PATENT SPECIFICATION

(11) **EP 4 076 014 B1**
(45) Date of publication and mention of the grant of the patent: **15.11.2023**
(21) Application number: 20830177.0
(22) Date of filing: 17.12.2020
(51) Int. Cl.: A23N 12/08, A23N 12/12, A47J 31/42

(54) **APPARATUS FOR ROASTING COFFEE BEANS AND FOR COLLECTING COFFEE CHAFFS**
VORRICHTUNG ZUM RÖSTEN VON KAFFEEBOHNEN UND ZUM SAMMELN VON KAFFEEHÜLSEN
APPAREIL DE TORRÉFACTION DE GRAINS DE CAFÉ ET DE COLLECTE D'ÉCUMES DE CAFÉ

(30) Priority: 19.12.2019 EP 19218316
(43) Date of publication of application: 26.10.2022
(73) Proprietor: Société des Produits Nestlé S.A., 1800 Vevey (CH)
(72) Inventor: SAVIOZ, Grégory, 1966 Saxonne (CH)
(74) Representative: Pasquino, Fabio
(86) International application number: PCT/EP2020/086677
(87) International publication number: WO 2021/122922

(56) References cited:
- US-A- 5 500 237
- US-A1- 2003 207 010
- US-A1- 2010 051 602
- US-A1- 2019 328 026

## Description

### 1. Field of the invention

The present invention relates to an apparatus for roasting coffee beans and for collecting chaffs of the so roasted coffee beans.

### 2. Technical background

Roasting coffee beans transforms unroasted coffee beans into roasted coffee beans. The unroasted coffee beans are typically green and/or dried coffee beans, and the roasted coffee beans particularly contribute to the flavor of the coffee beverage, which is prepared from the (grinded) roasted coffee beans. Roasting the coffee beans can be on a large scale, but also on a small scale. In small scale roasting of coffee beans, the business to the customer (a shop, a coffee shop, etc.) or a customer, e.g. the consumer of the coffee beverage, roasts the coffee beans. Roasting coffee beans by the consumer is very interesting, since the consumer can roast the coffee beans at home in order to experiment with different flavor profiles and in order to ensure a particularly fresh roast of the coffee beans, for example as a hobby. Home coffee bean roasters are for example known from US 2010/051602 A1 and US 2003/207010 A1.

When the coffee beans are roasted, the outer skins of the initially unroasted, typically green beans, the (coffee) chaffs, comes off. The chaffs need to be separated from the roasted coffee beans, since the chaffs are usually not used for preparing a coffee beverage from the coffee beans. That is, the chaffs remain as "waste", which needs to be removed from the roasted coffee beans and subsequently collected, e.g. in a dedicated jug or a chaffs collector, which needs to be entirely removed.

Removing the chaffs is not very convenient for the consumer, since the consumer cannot immediately focus on the finished product, i.e. the roasted coffee beans, but is busy with handling the chaffs. Further, removing the chaffs and accessing the roasted coffee beans in order to handle the coffee beans, for example for subsequent grinding and/or coffee beverage preparation, has the risk that the consumer burns himself due to touching machine parts, which might be heated up during the roasting process.

Therefore, it is an object of the present invention to provide an apparatus, which overcomes the afore-mentioned drawbacks. That is, it is in particular an object of the present invention to provide an apparatus, which provides for the consumer a more efficient and convenient roasting of coffee beans. These and other objects, which become apparent upon reading the following description, are solved by the subject matter of the independent claim. The dependent claims refer to preferred embodiments of the invention.

### 3. Summary of the invention

According to the invention, an apparatus for roasting coffee beans and for collecting chaffs of the so roasted coffee beans is provided. The apparatus comprises: a chamber in which coffee beans can be received for roasting, the chamber comprising an opening for accessing the chamber in order to at least remove coffee beans from the chamber, and a chaffs collector for collecting chaffs of the coffee beans, which are roasted by the chamber. The chaffs collector is movably arranged with respect to a specific movement axis in order to be moved between a closed position, in which the chaffs collector covers the opening of the chamber for roasting the coffee beans, and an open position, in which the chaffs collector does not cover the opening of chamber so that the chamber is accessible via the opening for removing coffee beans from the chamber, wherein the movement axis extends in a vertical direction, the opening is arranged for accessing the chamber along the vertical direction, the movement axis is a rotational movement axis so that a rotational movement about the movement axis moves the chaffs collector between the closed position and the open position.

The apparatus thus facilitates that the user of the apparatus can move or take away the chaffs collector into the open position with a simple movement in order to get access to the roasted coffee beans. In other words, by moving the the chaffs collector into the open position, e.g. immediately after the roasting process is finished, the user can first focus on the roasted coffee beans instead of the chaffs. As such, the handling of the chaffs is postponed to a later time, which is after handling of the roasted coffee beans, and thus the apparatus provides a more efficient and more convenient way for the user in order to roast coffee beans. The user experience is thus improved by the apparatus. Further, the apparatus provides a safer roasting of the coffee beans, since the chaffs collector, which could be heated due to the heat of the roasting process, is moved into a position, i.e. the open position, in which the risk of the user touching the (heated) chaffs collector is significantly reduced; that is, the chaffs collector is moved away from the user or a user side of the apparatus, when the chaffs collector is moved in the open position.

The movement axis is a rotational movement axis so that a rotational movement about the movement axis moves the chaffs collector between the closed position and the open position. The rotational movement axis may be provided or defined, for example, by a hinge or joint. Thereby, the chaffs collector can be very easily moved between the closed position and the open position. In general, the movement axis may also be, additionally or alternatively, a linear movement axis so that a linear movement moves the chaffs collector between the closed position and the open position. Such a linear movement axis may be provided, for example, by a slider joint or a slider element.

The movement axis extends in a vertical direction, when the opening is arranged for accessing the chamber along the vertical direction. In other words, the accessing direction for accessing the chamber and the movement axis are substantially parallel to each other. As such, the chaffs collector can be very easily moved between the closed position and the open position, and a very good access to the chamber via the opening is provided.

According to an embodiment that is outside the subject-matter of the claims, the movement axis may extent in a (or the) horizontal direction, when the opening is arranged for accessing the chamber along a (or the) vertical direction. In other words, the accessing direction for accessing the chamber and the movement axis may be substantially perpendicular to each other. As such, the chaffs collector can be very easily moved between the closed position and the open position, and a very good access to the chamber via the opening is provided.

The chaffs collector may be movably arranged with respect to only one specific movement axis. Therefore, a very simple design of the apparatus is provided, which at the same time facilitates that the chaffs collector can be very easily moved, i.e. with only one movement, between the closed position and the open position.

The apparatus may comprise a receptacle (e.g. in the form of a basket and/or sieve), wherein the receptacle comprises the chamber. The receptacle may be detachably attached to the apparatus. Thus, handling of the roasted coffee beans is even more convenient, since the user of the apparatus does not need to directly handle or touch the coffee beans. Instead, the user can indirectly handle the coffee beans, namely with the receptacle and thus without touching the coffee beans, and as such, for example, easily and safely empty the receptacle in order to provide the roasted coffee beans for further processing, e.g. in a grinder and/or a beverage preparation machine.

The receptacle may comprise a handle for manually handling the receptacle and thus preferably detaching the receptacle from the apparatus. The handle preferably comprises a material with low heat conductivity, such as plastic. In particular, the material of the handle may have a lower heat conductivity than the material of parts of the chamber, which receive the coffee beans for roasting (e.g., the bottom and/or the sidewall). Therefore, the risk that the user is burned and thus injured, when handling the roasted coffee beans immediately after roasting, is even more reduced.

The receptacle may be arranged such that by detaching (or handling) the receptacle from the apparatus, the chaffs collector can be moved or pushed into the open position. As such, the user of the apparatus does not need to directly contact or touch the chaffs collector in order to move the chaffs collector into the open position. Instead, the user indirectly contacts the chaffs collector via the receptacle in order to move the chaffs collector into the open position. This reduces the risk that the user of the apparatus is injured due to touching the (heated) chaffs collector. Therefore, in particular the safety of the apparatus is increased.

The apparatus may comprise a locking mechanism adapted to selectively lock or unlock the chaffs collector with respect to the chamber such that, when the chaffs collector is locked with respect to the chamber, the chaffs collector is prevented from moving from the closed position into the open position. The locking mechanism thus effectively effects that, for example, roasting of the coffee beans in the chamber is not disrupted by an uncovered opening.

The locking mechanism may be adapted to cooperate with the handle of the receptacle in order to lock the chaffs collector with respect to the chamber. Therefore, no extra parts needs to be provided for cooperating with the locking mechanism in order to lock the chaffs collector with respect to the chamber, and thus a very simple and compact design of the apparatus is provided.

The chaffs collector may be arranged to automatically move into an intermediate position, when the locking mechanism is operated to unlock to chaffs collector with respect to the chamber, wherein in the intermediate position, the opening is less covered by the chaffs collector than in the closed position. In the intermediate position, (hot) air and/or steam can thus escape from the chamber in a controlled manner, in particular such that the user of the apparatus is not affected by a sudden escape from (hot) air and/or steam in the (fully) open position.

The apparatus may comprise a housing for housing at least the chamber, wherein the chaffs collector is mounted to the housing in order to be movably arranged with respect to the movement axis. That is, the movement axis may be defined by the housing, for example by a joint or link element being arranged on and/or formed with the housing. For example, the housing may be designed such that the housing at least in part isolates the chamber. As such, it is effectively prevented that heat of the chamber is being conducted to an outer surface of the housing, and thus there is no or at least a reduced risk that the user of the apparatus touches hot parts of the apparatus.

The housing may comprise a base and a top, wherein the chamber is arranged such that the opening is arranged at the top of the housing. The housing thus effects that the opening is in a position, in which the user can very conveniently access the chamber via the opening. For example, the base of the housing may be adapted to be placed on a surface such as a tabletop.

The chaffs collector may be detachably arranged, such as detachably mounted to the housing. Therefore, the user can easily detach the chaffs collector from the apparatus, for example for handling the chaffs collector in order to throw the chaffs into a trash bin or into any other container for subsequent processing of the chaffs.

The apparatus may further comprise a device for generating a current of air inside of the chamber, e.g. for roasting and/or cooling the coffee beans received by the chamber. For example, the apparatus may also comprise a heater, which heats up (fresh) air, which flows then, by the device, into the chamber for roasting. Preferably, the device is arranged such that the current of air drives the chaffs of the coffee beans towards the chaffs collector such that the chaffs are collected by the chaffs collector. Therefore, the chaffs are very simply collected by the chaffs collector, and accordingly the chaffs collector can be very simply design, in particular in a compact manner.

The apparatus may be a home appliance apparatus. The apparatus may thus have a design for being used in a kitchen of a household, e.g. arranged next to and/or integrated with a coffee grinder and/or a beverage preparation machine. For example, the apparatus is an in-home solution, which particularly allows a fresh and/or personalized roast of coffee beans. With the apparatus, a home (coffee) roasting solution may thus be provided.

### 4. Description of preferred embodiments

In the following, the invention is described exemplarily with reference to the enclosed figures, in which
- Figure 1 -4: show different schematic perspective views (figures 1-3) and a schematic plan view (figure 4) of an apparatus according to a first preferred embodiment of the invention, wherein the chaffs collector is in the closed position;
- Figures 5-8: show different schematic perspective views (figures 5-7) and a schematic plan view (figure 8) of the apparatus according to the first preferred embodiment of the invention, wherein the chaffs collector is in the open position;
- Figure 8A: a schematic perspective exploded view of the apparatus according to the first preferred embodiment of the invention, wherein both the chaffs collector and the optional receptacle are detached from the apparatus;
- Figures 9-12: show different schematic perspective views (figures 9-11) and a schematic side view (figure 12) of an apparatus according to a the invention, wherein thesecond embodiment useful for understanding chaffs collector is in the closed position;
- Figures 13-16: show different schematic perspective views (figures 13-15) and a schematic plan view (figure 16) of the apparatus according to the second embodiment useful for understanding the invention, wherein thechaffs collector is in the open position;
- Figures 17 and 18: show a schematic perspective exploded view and a corresponding schematic side view of the apparatus according to the second embodiment useful for understanding the invention, wherein the chaffs collector is in the open position, and wherein the optional receptacle is detached from the apparatus;
- Figures 19 and 20: show a schematic perspective exploded view and a corresponding schematic side view of the apparatus according to the second embodiment useful for understanding the invention, wherein both the chaffs collector and the optional receptacle are detached from the apparatus; and
- Figure 21: shows a schematic perspective exploded view of the apparatus according to the second embodiment useful for understanding the invention, wherein both the chaffs collector and the optional receptacle are detached from the apparatus.

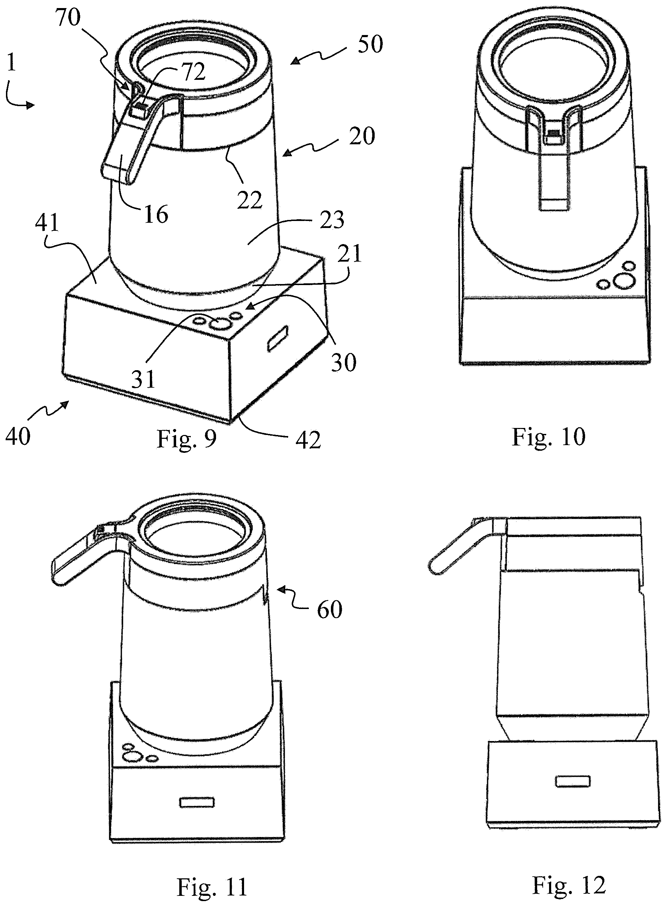

In the figures, two preferred embodiments of an apparatus 1 are exemplarily shown. The second embodiment of figures 9-12 is outside the claimed subject-matter, but it is useful for understanding the invention.

The apparatus 1 is adapted for roasting coffee beans. More specifically, the apparatus 1 is adapted to transform unroasted coffee beans, for example in the form of green and/or dried coffee beans, into roasted coffee beans. More specifically, the roasting of the coffee beans transforms the chemical and physical properties of the unroasted coffee beans in order to produce the characteristic flavor of the roasted coffee beans and, thus, of the coffee beverage, which is prepared from the so roasted coffee beans. That is, the roasting of the coffee beans effect the specific taste of roasted coffee beans, for example, by a Maillard reaction and other chemical reactions. The process of roasting the coffee beans therefore precedes other processes required for preparing the coffee beverage, such as coffee grinding and/or coffee brewing, e.g. coffee extraction.

Furthermore, the apparatus 1 is adapted for collecting chaffs of the so roasted coffee beans. That is, the unroasted coffee beans typically have a (green and/or dried) skin, in particular when it is first picked off the coffee tree. The chaff may also be referred to as husk of the coffee bean. During roasting of the coffee beans, this skin comes off the coffee beans and thus remains as chaffs. That is, in particular the high temperature of roasting allows the chaffs to be easily removed from the coffee beans, without the need of additional work. Since it is desired that this chaffs of the so roasted coffee beans does not remain with the roasted coffee beans, because, for example, the consumer does not wish to have the chaffs inside of the grinder and/or beverage preparation machine and, thus, inside of the coffee beverage, the chaffs are collected by the apparatus 1 such that the chaffs will not remain with the finished product, which is the roasted coffee beans.

The apparatus 1, which exemplarily shown in the figures, is adapted for small-scale coffee roasting (i.e. on-site coffee roasting), and is thus in particular not a large-scale (industrial) roasting apparatus or machine. The apparatus 1 is thus particularly suitable for being used on the side of the business to customer (e.g. a coffee shop) and/or of the customer, which is typically the consumer of the coffee beverage. Therefore, the apparatus 1 is preferably a home appliance apparatus. As such, the apparatus 1 may be used in a household or kitchen, in particular on a tabletop, e.g. next to or (functionally) integrated with a coffee grinder and/or a beverage preparation machine. The apparatus 1 therefore preferably has a size and weight for being transportable by a single person, in particular without the need of a dedicated transport mechanism.

The apparatus 1 comprises a chamber 10, in which coffee beans can be received for roasting. For example, the chamber 10 is delimited by a bottom 11 and a sidewall 12, which extends from the bottom 11. Therefore, when the coffee beans are received by the chamber 10, the coffee beans are preferably supported on the bottom 11 and are at least in part in contact with the sidewall 12. The chamber 10 has a design so that in particular heat and/or heated air can come in contact with the (unroasted) coffee beans in order to roast the coffee beans; for example, the bottom 11 and/or the sidewall 12 is made of a material with a relatively high heat conductivity, e.g. a material comprising or consisting of metal. The bottom 11 and/or the sidewall 12 may comprise one or more holes, which facilitate that heat and/or a current of air (for heating and/or for cooling) can flow into the chamber 10 to accordingly process the coffee beans.

The chamber 10 comprises an opening 13 for accessing the chamber 10. As such, via the opening 13, coffee beans can be at least removed from the chamber 10. The opening 13 preferably also facilitates that coffee beans can be inserted into the chamber 10, i.e. the chamber 10 may be filled with coffee beans by way of the opening 13. The opening 13 preferably defines an accessing direction for at least removing coffee beans from the chamber 10 and preferably also for inserting coffee beans into the chamber 10. This accessing direction may extent in a vertical direction, as shown in the figures. As such, the user of the apparatus 1 may access the chamber 10 from above the apparatus 1**.** The opening 13 is not limited to a specific form. The opening 13 is preferably defined by the sidewall 12, e.g. by the distal end of the sidewall 12. Thus, the opening 13 may be arranged opposite to the bottom 11. For example, the opening 13 may extent in a plane. The opening 13 may have a form corresponding to the bottom 11 and/or may have a round (circular, elliptical, etc.) form, however may also have different forms, e.g. a polygonal, rectangular, or square form.

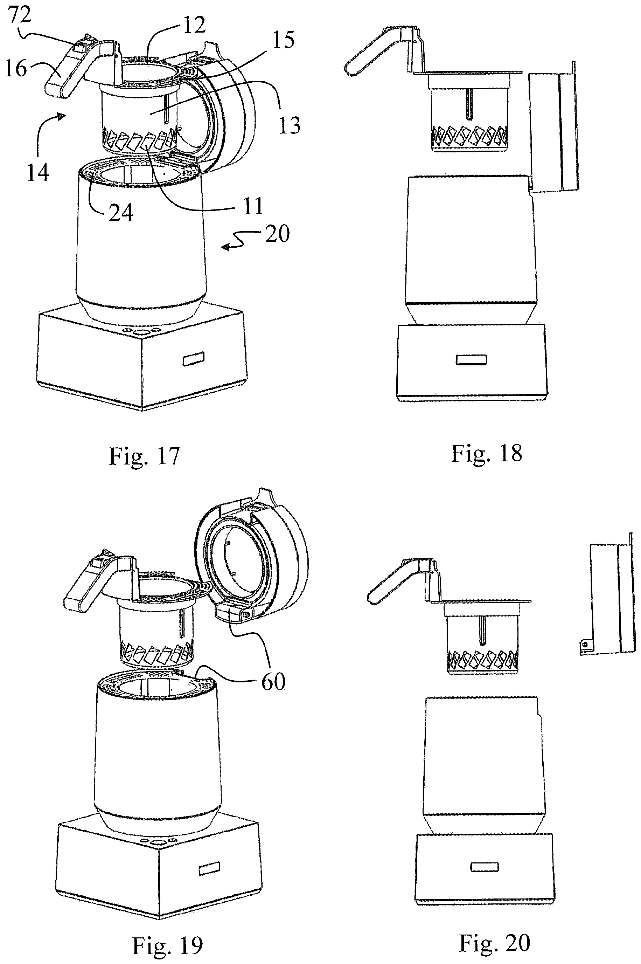

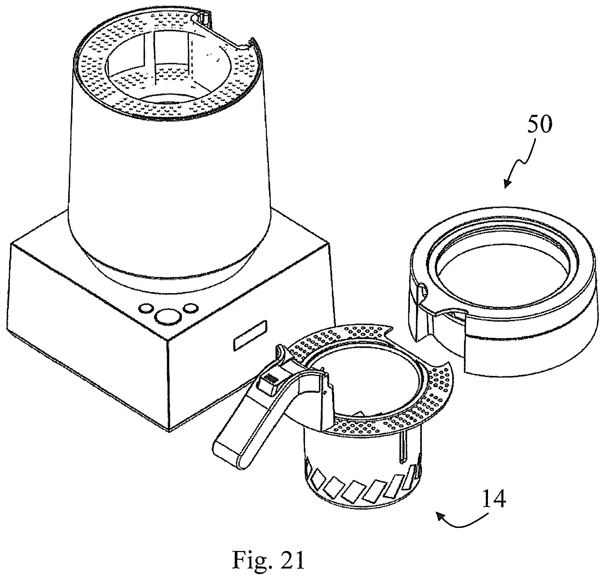

The apparatus 1 may comprise a receptacle 14, which comprises the chamber 10. As shown in figures 17-21, the receptacle 14 may be detachably attached to the apparatus 1, e.g. by way of a form and/or a frictional fit. For example, the receptacle 14 may be detachably attached to the apparatus 1 such that in an attached position, the receptacle 14 has a defined position with respect to the apparatus 1**.** In other words, the detachably designed attachment of the receptacle 14 preferably effects that, by attaching the receptacle 14 to the apparatus 1, the receptacle 14 is automatically in a position, in which the coffee beans received by the chamber 10 can be accordingly processed, i.e. roasted, by the apparatus 1**.** The receptacle 14 may comprise a flange 15 for positioning the receptacle 14 with respect to the apparatus 1**.** For example, the flange 15 may be positioned and supported on a dedicated part of the apparatus 1 in order to accordingly position the receptacle 14 with respect to the apparatus 1**.** The flange 15 may extent from the sidewall 12 and/or the opening 13.

The receptacle 14 may comprise a handle 16 for manually handling the receptacle 14, e.g. in order to detach the receptacle 14 from the apparatus 1 and/or to attach the receptacle to the apparatus 1**.** The handle 16 preferably has a design such that the handle 16 can be grasped by a human hand. For example, the handle 16 extends away from the receptacle 14. As such, the handle 16 may extent to be (at least in part) inclined or parallel with respect to the opening 13, e.g. with respect to the plane, in which the opening 13 extends. In other words, the handle 16 may (at least in part) extent to be inclined or perpendicular with respect to the accessing direction, which is defined by the opening 13. Preferably, the handle 16 extends from the flange 15.

For secure handling of the receptacle 14 by the handle 16, the handle 16 preferably comprises or consists of a material with low heat conductivity, such as plastic. Thus, the material of the handle may have a lower heat conductivity than of the material of other parts of the receptacle 14, such as of the bottom 11 and/or the sidewall 12 and/or the flange 15, which are preferably made of a material with high heat conductivity, such as metal.

The apparatus 1 may further comprise a housing 20 for housing at least the chamber 10. For example, the housing 20 has a base 21 and a top 22, wherein the chamber 10 is arranged such that the opening 13 is arranged at the top 22 of the housing 20. As such, the opening 13 is preferably flush with the top 22. The housing 20 may also comprise a sidewall 23, which extends from the bottom 21 to the top 22 and preferably circumferentially surrounds the chamber 10. If the receptacle 14 is present, the housing 20 may be designed to receive the receptacle 14, such that the receptacle 14 is in a defined position, when the receptacle 14 is attached to the housing 20 and thus to the apparatus 1**.** For example, the housing 20 comprises a receiving part or section 24, on which the receptacle 14, e.g. its flange 15 and/or handle 16, can be supported for attaching the receptacle 14 to the apparatus 1**.** The receiving part 24 may therefore be - at least in part - designed correspondingly (or complementarily) to the flange 15 and/or handle 16, and/or the receiving part 24 may be designed to cooperate with the receptacle 14 and/or flange 15 and/or handle 16 in order to accordingly attach and position the receptacle 14 to the apparatus 1**.** The housing 20 is not limited to a specific form. The housing 20 may have a non-symmetrical or symmetrical form. For example, the housing 20 has substantially the form of a cylinder or a (truncated) cone.

The apparatus 1 may further comprise a device (not shown; e.g. a fan) for generating a current of air inside of the chamber 10. This current of air may be used for roasting the coffee beans, which are received by the chamber 10. For example, the apparatus 1 or the device may further comprise a heater, which heats up (fresh) air, wherein the device transports this heated up air into the chamber 10. The current of (hot) air therefore comes into contact with the coffee beans and thus roasts the coffee beans. The current of air may be also such that the coffee beans inside of the chamber 10 are agitated or moved, in particular in order to improve the roasting of the coffee beans. Additionally or alternatively, the current of air generated by the device may be used for cooling the (already roasted) coffee beans received by the chamber 10. For example, for cooling the coffee beans, the current of air may be not heated up (by the heater), but only transport (fresh) air such as ambient air. Thus, for providing the current of air for cooling, the device may simply remain in an activated state, whereas the heater is simply put in a deactivated state, i.e. turned off.

The apparatus 1 may also comprise a control unit, in order to accordingly control the roasting of the coffee beans, e.g. according to a preprogrammed program, e.g. including a predefined roasting and/or temperature profile. The control unit may be functionally connected to the device and/or the heater so that the device and/or heater accordingly roast and/or cool the coffee beans received by the chamber 10.

Preferably, the apparatus 1 comprises a user interface 30, which is preferably functionally connected to the control unit. The user interface 30 facilitates that the user of the apparatus 1 can accordingly control the apparatus 1, in particular for roasting the coffee beans and/or for terminating roasting of the coffee beans. The user interface 30 may comprise one or more (e.g. only three) control elements 31, e.g. in the form of one or more buttons or other touch sensitive elements (touchscreen, etc.), for controlling the apparatus 1**.** For example, the one or more control elements 31 comprise an element for starting the roasting process and an element for stopping or terminating the roasting process. The control elements 31 may also comprise a control element for powering up (and turning off) the apparatus 1 (e.g. an on/off control element). Stopping of the roasting process may be also automatically carried out by the control unit, e.g. after a predetermined (roasting) time has lapsed. The user interface 30 is preferably arranged on a front side of the apparatus 1, i.e. a user side of the apparatus 1**.**

The device, the control unit, and/or the user interface 30 may be provided in or on the housing 20 and/or a further housing part 40. The further housing part 40 may be provided such that the housing 20, e.g. its bottom 21, is arranged on a top 41 of the further housing part 40. Preferably, the further housing part 40 forms the bottom or support of the apparatus 1**.** Thus, the further housing part 40 may be designed such that the apparatus 1 can be placed on a surface such as a tabletop. Therefore, the further housing part 40 preferably comprises a bottom 42, which is opposite to the top 41, wherein the bottom 42 is adapted to be placed on a surface such as a tabletop. The device, the control unit and/or user interface 30 may be also provided in the housing 20, so that, for example, the further housing part 40 is not necessary. Therefore, the housing 20, e.g. its bottom 21, may also form the bottom of the apparatus 1**.**

The apparatus 1 may further comprise a power inlet, e.g. in the form of a power plug. By way of the power inlet, the parts of the apparatus 1 requiring energy, such as electrical energy (voltage and/or current), in particular the device, the control unit, and/or the user interface 30, can be supplied with energy. The power plug may be provided on a rear side of the apparatus 1 and/or on the housing 20 or the further housing part 40.

According to the invention, the apparatus 1 further comprises a chaffs collector 50 for collecting the chaffs of the coffee beans, which are roasted by the chamber 10. The chaffs collector 50 may comprise a compartment 51, in which the chaffs are collected and prevented from returning to the chamber 10. For example, the chaffs collector 50 may comprise an inlet, which allows only a unidirectional flow of the chaffs so that the chaffs are collected by the chaffs collector 50; thus, the inlet may allow a flow of the chaffs 50 into the compartment 51, but prevent a flow of the chaffs out of the compartment 51, in particular towards the chamber 10. In order to provide a particularly good collection of the chaffs by the chaffs collector 50, the chaffs collector 50 and the (current of air generating) device can be accordingly arranged to one another. For example, the device can be arranged such that the current of air, which is generated by the device, drives the chaffs of the coffee beans towards the chaffs collector 50, such that (in the closed position of the chaffs collector 50, see below) the chaffs are collected by the chaffs collector 50.

The chaffs collector 50 may be designed to selectively open the chaffs collector 50 or, if present, the compartment 51 in order to throw away or otherwise use the collected chaffs. The chaffs collector 50 may be detachably arranged, so that the chaffs collector 50 can be detached from the apparatus 1, e.g. in order to easily throw away the chaffs. For example, the chaffs collector 50 is detachably mounted to the housing 20 (for example on the rear side of the housing 20), e.g. by an accordingly designed joint. The chaffs collector 50 may form the top of the apparatus 1 and/or is arranged at the top 22 of the housing 20.

The chaffs collector 50 is movably arranged with respect to a specific movement axis in order to be moved between a closed and an open position, i.e. into the closed position or into the open position. The specific movement axis is preferably a movement axis, which is fixed with respect to the apparatus 1**.** A "fixed movement axis" is to be understood such that the position and orientation of the movement axis is fixed with respect to the apparatus 1, in particular fixed with respect to the housing 20 and/or the further housing part 40.

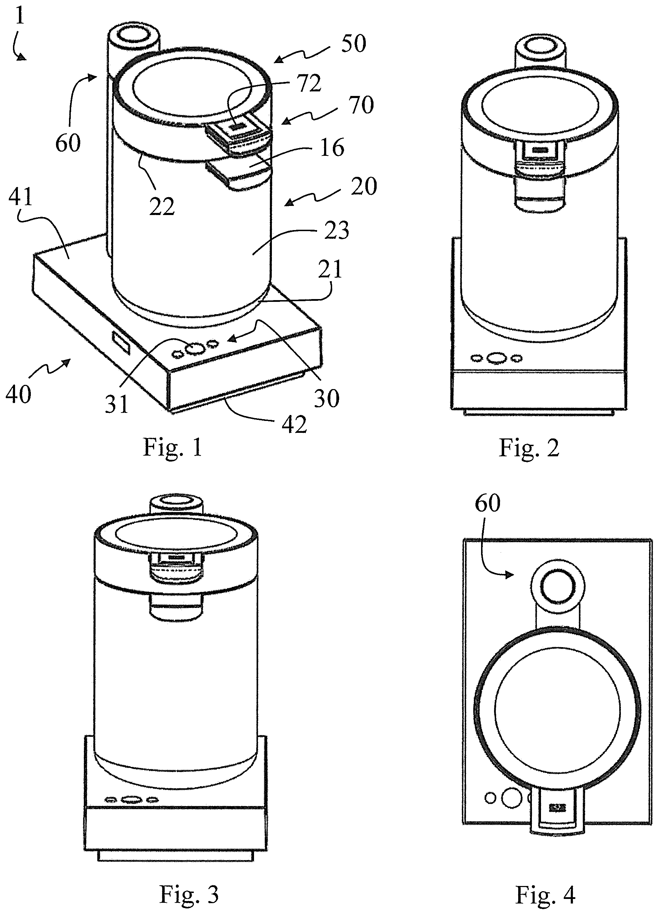

As exemplarily shown in figures 1-4 and figures 9-12, in the closed position the chaffs collector 50 covers the opening 13 of the chamber 10. In this position, roasting of the coffee beans inside of the chamber 10 can thus be carried out.

That is, in the closed position, the chaffs collector 50 covers the opening 13 such that accessing the chamber 10 via the opening 13 is not possible. For example, in the closed position a reduced amount (with respect to the open position) of air and/or heat or substantially no air and/or heat can escape the chamber 10 by way of the opening 13.

Therefore, the chaffs collector 50 and/or the opening 13, e.g. the receptacle 14, may comprise a sealing, which effects, in the closed position, that the reduced amount of air and/or heat or substantially no air and/or heat can escape the chamber 10 by way of the opening 13.

In the closed position, the user of the apparatus 1 is therefore preferably not affected by (hot) air and/or heat escaping the chamber 10 by way of the opening 13.

In the closed position, the chaffs collector 50 is preferably flush with the housing 20. As such, the chaffs collector 50 may form together with the housing 20 a geometrical form, which is - disregarding a possible (sealed) gap between the collector 50 and the housing 20 - continuously formed from the housing 20 to the chaffs collector 50. For example, the chaffs collector 50 and the housing 20 together form a substantially symmetrical form in the closed position, such as a substantially cylindrical or (truncated) conical form. The chaffs collector 50 is therefore preferably correspondingly formed to the housing 20, for example with a round form having a diameter, which corresponds to the diameter of the cross-section of the housing 20, which comprises the top 22. The chaffs collector 50 may have a substantially cylindrical form.

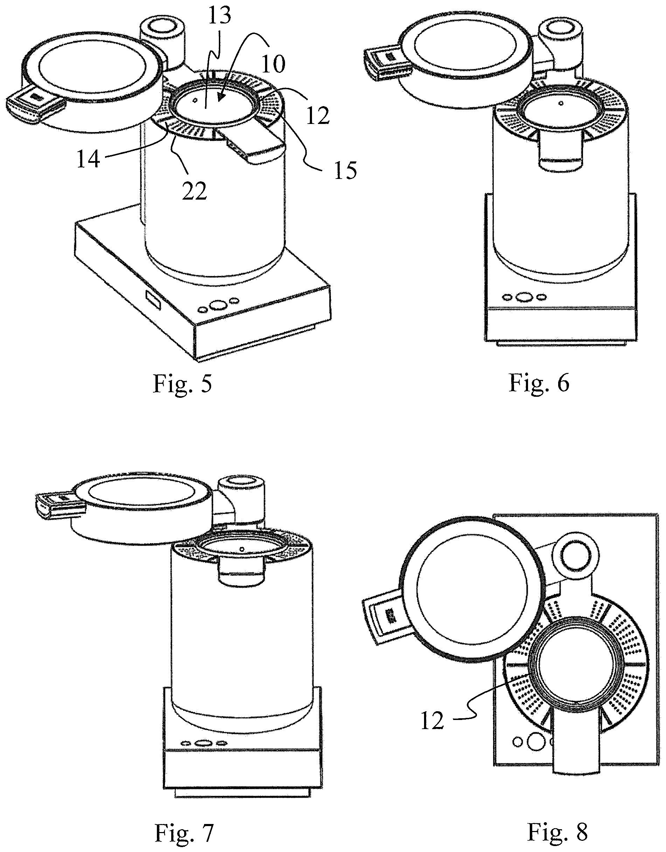

As exemplarily shown in figures 5-8 and figures 13-16, in the open position the chaffs collector 50 does not cover the opening 12 of the chamber 10. Thus, the chamber 10 is accessible (for a human hand) via the opening 13 for removing coffee beans from the chamber 10, and preferably also for inserting coffee beans into the chamber 10. In the open position, the chamber 10 is therefore accessible along the before mentioned accessing direction, which is defined by the opening 13.

In the open position, the chaffs collector 50 is thus moved away from a user side of the apparatus 1, in particular towards a rear side of the apparatus 1, which is opposite to the user side of the apparatus 1**.** The user side is typically the side of the apparatus 1, which comprises the user interface 30 and/or which is directed towards the user operating the apparatus 1**.** As such, the chaffs collector 50 is in a position, in which the user of the apparatus 1 can easily access and focus on the chamber 10, which receives the (roasted) coffee beans. In the open position, there is also not the risk that the user is burned because of the heated chaffs collector 50. In the open position, the opening 13 is preferably completely uncovered. That is, when viewed in a top plan view of the apparatus 1 (i.e. in the vertical direction or in the accessing direction), the opening 13 and the chaffs collector 50 preferably do not overlap.

In the two preferred embodiments shown in the figures, and according to the invention, the movement axis is a rotational movement axis. Thereby, a rotational movement about the movement axis moves the chaffs collector 50 between the closed and the open position. The chaffs collector 50 may be mounted to the housing 20 and/or the further housing part 40 in order to be movably arranged with respect to the movement axis. The movement axis may be defined by a joint or hinge 60. For example, the joint 60 comprises a first joint element (e.g. on the side of the chaffs collector 50) and a second joint element (e.g. on the side of the housing 20 or housing part 40), which are connected to each other such that the joint elements are relatively movable to each other with respect to the movement axis in order to thus provide the specific movement axis.

In an example not according to the claimed invention, the movement axis may be a linear movement axis so that a linear movement along this movement axis moves the chaffs collector 50 between the closed position and open position. As such, the joint 60 may provide a sliding movement, e.g. by connecting a first joint element to the second joint element such that one of the joint elements can slide with respect to or in the respective other joint element. In the two preferred embodiment shown in the figures, the chaffs collector 50 is movably arranged with respect to only one specific movement axis. As such, the joint 60 preferably provides only one degree of freedom. The chaffs collector 50 can therefore be brought into the open position or closed position with a single movement with respect to the movement axis, which thus particularly improves the ease of use of the apparatus 1**.** The invention is, however, not limited to have the chaffs collector 50 to be movably arranged with respect to only one specific movement axis. The chaffs collector 50 may be also movably arranged with respect to more than one specific movement axis, for example such that the chaffs collector 50 is first moved with respect to a first movement axis and, subsequently, moved with respect to a second movement axis in order to be moved into the open or closed position. These movement axes may define the same manner of movement (e.g. rotational or linear) or may define different manners of movement (e.g. one for rotational movement and one for linear movement).

The apparatus 1 may comprise a locking mechanism 70, which is adapted to selectively lock or unlock the chaffs collector 50 with respect to the chamber 10, preferably with respect to the housing 20 and/or receptacle 14. As such, when the chaffs collector 50 is locked with respect to the chamber 10, the chaffs collector 50 is prevented from moving from the closed position into the open position. In order to lock the chaffs collector 50 with respect to the chamber 10, the locking mechanism 70 may be adapted to cooperate with the handle 16, as best shown in figures 9-16 for the second preferred embodiment. For example, the locking mechanism 70 comprises a locking part 71, which is provided on the side of or on the chaffs collector 50, wherein the locking part 71 is adapted to cooperate with a correspondingly formed part of the handle 16, e.g. by engaging each other, in order to be or remain locked with respect to the chamber 10. In other examples, the locking mechanism 70 may be also adapted to cooperate with other fixed parts of the apparatus 1, e.g. the housing 20 and/or the receptacle 14, in order to lock to chaffs collector 50 with respect to the chamber 10.

The locking mechanism 70 may comprise an operating element 72 (e.g. a button or a touch sensitive element), which is adapted to unlock the locking mechanism 70, i.e. to unlock the chaffs collector 50 with respect to the chamber 10. The operating element 72 may be provided on the side of the chaffs collector 50 (see, for example, first embodiment) or on the side of the chamber 10 (see, for example, second embodiment). As exemplarily shown for the second preferred embodiment in figures 9-21, the operating element 72 may be arranged on the handle 16. In other examples, the operating element 72 may be arranged on the receptacle 14 or on the housing 20.

The chaffs collector 50 may be arranged to automatically move into an intermediate position, when the locking mechanism 70 is operated to unlock the chaffs collector 50 with respect to the chamber 10. In the intermediate position, the opening 12 is less covered by the chaffs collector 50 than in the closed position. In the intermediate position, the opening 12 is preferably more covered by the chaffs collector 50 than in the open position. That is, in the intermediate position, the opening 13 and the chaffs collector 50 may partially overlap. Preferably, in the intermediate position the chaffs collector 50, e.g. a side edge of the chaffs collector 50, and the opening 13 e.g. a (circumferential) side edge of the opening 13, form a gap, such as a gap having only a few millimeters. In the intermediate position, (hot) air and/or gas or vapor can thus controllably escape the chamber 10 via the opening 12. It is thus prevented, that the (hot) air and/or gas/vapor suddenly escapes the chamber 10, as it would be the case when the chaffs collector 50 is moved into the open position immediately after roasting. The (hot) air and/or vapor thus may escapes from the chamber 10 via the gap, which is formed between the chaffs collector 50 and the opening 12.

For automatically moving the chaffs collector 50 from the closed position into the intermediate position, the apparatus 1, e.g. the chaffs collector 50, the housing 20, and/or the joint 60, may comprise an elastic element such as a (weak) spring; i.e. the chaffs collector 50 may be spring loaded. The elastic element may be provided such that in the closed position the elastic element is biased to move the chaffs collector 50 into the intermediate position. By unlocking the locking mechanism 70, the elastic element thus moves the chaffs collector 50 into the intermediate position by the elastic restoring force of the elastic element. Once having reached the intermediate position, the user of the apparatus 1 can then, e.g. manually, move the chaffs collector 50 further into the open position.

For locking the chaffs collector 50 with respect to the chamber 10, the user may simply manually move the chaffs collector 50 into the closed position. When the chaffs collector 50 arrives in the closed position, the locking mechanism 70 then automatically locks the chaffs collector 50 with respect to the chamber 10, e.g. by a biasing element (spring, etc.), which is biased to bring the locking mechanism 70 into the locked position, when the chaffs collector 50 is in the closed position.

According to the invention and as shown in the first preferred embodiment shown in figures 1-8, the movement axis extends in a vertical direction, and the opening 13 is arranged so that the chamber 10 can be accessed also along this vertical direction. That is, the movement axis of the chaffs collector 50 is substantially parallel to the accessing direction of the chamber 10. As can be seen in figures 1-8, the chaffs collector 50 can thus be moved in a plane, which is substantially parallel to the opening 12 (e.g. a plane, in which the opening 13 extends) and/or a surface, on which the apparatus 1 is arranged, in order to move the chaffs collector 50 between the open position and the closed position. As can be seen when comparing figures 1-4 with figures 5-8, the apparatus 1 has therefore, both in the open position and in the closed position, the same height. Said height is measured in the vertical direction, when the apparatus 1 is arranged to be operated, i.e. in particular for roasting coffee beans, for example when the opening 13 is arranged to access the chamber 10 along the vertical direction.

The height may thus be measured from the surface, on which the apparatus 1 is arranged.

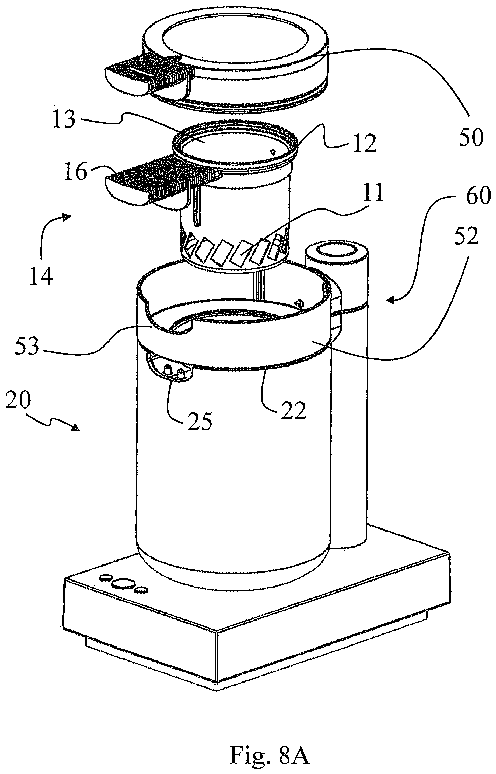

As can be seen in figure 8A, the chaffs collector 50 may comprise a receiving element 52, which is adapted to receive the chaffs collector 50, preferably such that the chaffs collector 50 is in a defined position and/or orientation with respect to the receiving element 52. Therefore, the chaffs collector 50 may be arranged to be detachably provided with respect to the receiving element 52. For example, the receiving element 52 comprises a section 53, which is formed to receive the chaffs collector 50 such that the chaffs collector 50 is in the defined position and/or orientation. The section 53 may be correspondingly or complementary formed to a section or part of the chaffs collector 50, such as complementary formed to the handle of the chaffs collector 50. The section 53 may be formed as a recess in the receiving element 52.

The receiving element 52 may be moveably arranged in order to effect that the chaffs collector 50 is moveably arranged with respect to the movement axis in order to move between the closed position and the open position. For example, the receiving element 52 comprises the joint 60 or at least part of the joint 60, such a one of the joint elements.

As can be seen also in figure 8A, the housing 20 may be adapted to receive the receptacle 14 such that the receptacle 14 is in a defined position and/or orientation with respect to the housing 20. For example, the housing 20, in particular its top 22, comprises a section 25, which is formed to receive the receptacle 14 such that the receptacle 14 is in the defined position and/or orientation. The section 25 may be correspondingly or complementary formed to a section or part of the receptacle 14, such as complementary formed to the handle 16 of the receptacle 14. The section 25 may be formed as a recess in the housing 20.

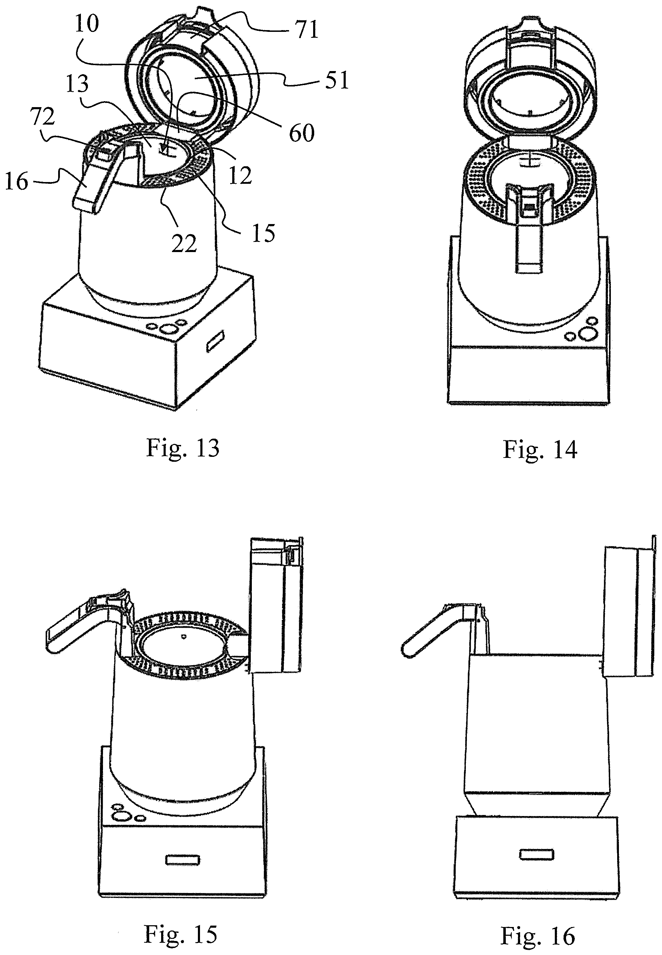

The second embodiment, which is outside the claimed subject-matter but is useful for understanding the invention, shown in figures 9-21 differs from the first embodiment in particular in that the movement axis extends differently, namely in a horizontal direction. In the second embodiment, the opening 13 is preferably also arranged for accessing the chamber 10 along the vertical direction. As such, the movement axis may be substantially perpendicular to the accessing direction of the chamber 10. As can be seen in figures 9-16, an angle between the chaffs collector 50 and the opening 13 (e.g. a plane, in which the opening 12 extents) and/or the surface, on which the apparatus is arranged, varies, when the chaffs collector 50 is moved between the open position at the closed position. More specifically, said angle may be substantially o° in the closed position (see, for example, figure 12), wherein said angle is substantially 90°, when the chaffs collector 50 is in the open position (see, for example, figure 16). As such, the apparatus 1 may have, in the open position, a higher height than in the closed position.

As exemplarily shown, in particular, in figures 13-18, the receptacle 14 may be arranged such that by detaching the receptacle 14 from the apparatus 1, e.g. from the housing 20, the chaffs collector 50 can be moved or pushed into the open position. As such, the user does not need to directly touch the chaffs collector 50 in order to move the chaffs collector 50 into the open position. More specifically, by moving the receptacle 14 along the vertical direction, the receptacle 14 comes into (mechanical) contact with the chaffs collector 50 to thereby move the chaffs collector 50 into the open position. For example, the flange 15 and/or a part of the handle 16, e.g. a part connecting the handle 16 with the chamber 10 and/or flange 15, comes into (mechanical) contact with (a lower side of) the chaffs collector 50, when the receptacle 14 is moved to be detached from the apparatus 1, e.g. from the housing 20. Therefore, with a single (handling) movement of the receptacle 14, for example along the vertical direction, both the receptacle 14 is detached from the apparatus 1 and the chaffs collector 50 is moved into the open position. Therefore, the operation of the machine is significantly simplified.

Additionally or alternatively, the chaffs collector 50 may be moved into the open position and into the closed position by directly acting on the chaffs collector 50. For example, the chaffs collector 50 may comprise a handle for handling the chaffs collector 50 to be moved between the closed position and the open position. This handle may - as for the optional handle 16 - also be made of a material, which comprises a material with low heat conductivity and/or a material with a lower heat conductivity than other parts of the chaffs collector 50. For example, the material may be or comprise plastic. Therefore, there is not the risk that the user's hand is burned, when touching the handle of the (possibly heated) chaffs collector 50.

It should be clear to a skilled person that the embodiments shown in the figures are only preferred embodiments, but that, however, also other designs of an apparatus 1 can be used.

## Claims

1. An apparatus (1) for roasting coffee beans and for collecting chaffs of the roasted coffee beans, the apparatus (1) comprising:
a chamber (10) in which coffee beans can be received for roasting, the chamber (10) comprising an opening (13) for accessing the chamber (10) in order to at
least remove coffee beans from the chamber (10), and
a chaffs collector (50) for collecting chaffs of the coffee beans, which are roasted by the chamber (10),
wherein the chaffs collector (50) is moveably arranged with respect to a specific movement axis in order to be moved between a closed position, in which the chaffs collector (50) covers the opening (12) of the chamber (10) for roasting the coffee beans, and an open position, in which the chaffs collector (50) does not cover the opening (12) of the chamber (10) so that the chamber (10) is accessible via the opening (12) for removing coffee beans from the chamber (10),
wherein the movement axis extends in a vertical direction, the opening (13) is arranged for accessing the chamber (10) along the vertical direction, the movement axis is a rotational movement axis so that a rotational movement about the movement axis moves the chaffs collector (50) between the closed position and the open position.

2. The apparatus (1) according to any one of the preceding claims, wherein the chaffs collector (50) is moveably arranged with respect to only one specific movement axis.

3. The apparatus (1) according to any one of the preceding claims, wherein the apparatus (1) further comprises a receptacle (14), wherein the receptacle (14) comprises the chamber (10).

4. The apparatus (1) according to claim 4, wherein the receptacle (14) comprises a handle (16) for manually handling the receptacle (14) and thus, preferably, detaching the receptacle (14) from the apparatus (1), wherein the handle (16) preferably comprises a material with low heat conductivity.

5. The apparatus (1) according to claim 4 or 5, wherein the receptacle (14) is arranged such that by detaching the receptacle (14) from the apparatus (1) the chaffs collector (50) can be moved or pushed into the open position.

6. The apparatus (1) according to any one of the preceding claims, wherein the apparatus (1) comprises a locking mechanism (70) adapted to selectively lock or unlock the chaffs collector (50) with respect to the chamber (10) such that, when the chaffs collector (50) is locked with respect to the chamber (10), the chaffs collector (50) is prevented from moving from the closed position into the open position.

7. The apparatus (1) according to claim 7, wherein the chaffs collector (50) is arranged to automatically move into an intermediate position, when the locking mechanism (70) is operated to unlock the chaffs collector (50) with respect to the chamber (10), wherein in the intermediate position the opening (13) is less covered by the chaffs collector (50) than in the closed position.

8. The apparatus (1) according to any one of the preceding claims, wherein the apparatus (1) comprises a housing (20) for housing at least the chamber (10)

9. The apparatus (1) according to claim 9, wherein the housing (20) comprises a base (21) and a top (22), and wherein the chamber (10) is arranged such that the opening (13) is arranged at the top (22) of the housing (20).

10. The apparatus (1) according to any one of the preceding claims, wherein the chaffs collector (50) is detachably arranged.

11. The apparatus (1) according to any one of the preceding claims, further comprising a device for generating a current of air inside of the chamber (10), e.g. for roasting and/or cooling the coffee beans received by the chamber (10), wherein the device is preferably arranged such that the current of air drives the chaffs of the coffee beans towards the chaffs collector (50) such that the chaffs are collected by the chaffs collector (50).

12. The apparatus (1) according to any one of the preceding claims, wherein the apparatus (1) is a home appliance apparatus.

## Patentansprüche

1. Vorrichtung (i) zum Rösten von Kaffeebohnen und zum Sammeln von Kaffeehäutchen der gerösteten Kaffeebohnen, die Vorrichtung (i) umfassend:
eine Kammer (10), in der Kaffeebohnen zum Rösten aufgenommen werden können, die Kammer (10) umfassend eine Öffnung (13) zum Zugreifen auf die Kammer (10), um mindestens Kaffeebohnen aus der Kammer (10) zu entfernen, und
einen Kaffeehäutchensammler (50) zum Sammeln von Kaffeehäutchen der Kaffeebohnen, die durch die Kammer (10) geröstet werden,
wobei der Kaffeehäutchensammler (50) in Bezug auf eine spezifische Bewegungsachse beweglich angeordnet ist, um zwischen einer geschlossenen Position, in der der Kaffeehäutchensammler (50) die Öffnung (12) der Kammer (10) zum Rösten der Kaffeebohnen bedeckt, und einer offenen Position bewegt zu werden, in der der Kaffeehäutchensammler (50) die Öffnung (12) der Kammer (10) nicht bedeckt, sodass die Kammer (10) über die Öffnung (12) zugänglich ist, um Kaffeebohnen aus der Kammer (10) zu entfernen,
wobei sich die Bewegungsachse in einer vertikalen Richtung erstreckt, die Öffnung (13) zum Zugreifen auf die Kammer (10) entlang der vertikalen Richtung angeordnet ist, die Bewegungsachse eine Drehachse ist, sodass eine Drehbewegung um die Bewegungsachse den Kaffeehäutchensammler (50) zwischen der geschlossenen Position und der offenen Position bewegt.

2. Vorrichtung (1) nach einem der vorstehenden Ansprüche, wobei der Kaffeehäutchensammler (50) in Bezug auf nur eine bestimmte Bewegungsachse beweglich angeordnet ist.

3. Vorrichtung (1) nach einem der vorstehenden Ansprüche, wobei die Vorrichtung (1) ferner einen Behälter (14) umfasst, wobei der Behälter (14) die Kammer (10) umfasst.

4. Vorrichtung (1) nach Anspruch 4, wobei der Behälter (14) einen Griff (16) zum manuellen Handhaben des Behälters (14) umfasst und somit vorzugsweise zum Trennen des Behälters (14) von der Vorrichtung (1), wobei der Griff (16) vorzugsweise ein Material mit geringer Wärmeleitfähigkeit umfasst.

5. Vorrichtung (i) nach Anspruch 4 oder 5, wobei der Behälter (14) derart angeordnet ist, dass durch das Trennen des Behälters (14) von der Vorrichtung (1) der Kaffeehäutchensammler (50) in die offene Position bewegt oder geschoben werden kann.

6. Vorrichtung (1) nach einem der vorstehenden Ansprüche, wobei die Vorrichtung (1) einen Verriegelungsmechanismus (70) umfasst, der konfiguriert ist, um den Kaffeehäutchensammler (50) in Bezug auf die Kammer (10) derart selektiv zu verriegeln oder zu entriegeln, dass, wenn der Kaffeehäutchensammler (50) in Bezug auf die Kammer (10) verriegelt ist, verhindert wird, dass sich der Kaffeehäutchensammler (50) von der geschlossenen Position in die offene Position bewegt.

7. Vorrichtung (1) nach Anspruch 7, wobei der Kaffeehäutchensammler (50) angeordnet ist, um sich automatisch in eine Zwischenposition zu bewegen, wenn der Verriegelungsmechanismus (70) betätigt wird, um den Kaffeehäutchensammler (50) in Bezug auf die Kammer (10) zu entriegeln, wobei in der Zwischenposition die Öffnung (13) weniger von dem Kaffeehäutchensammler (50) bedeckt ist als in der geschlossenen Position.

8. Vorrichtung (1) nach einem der vorstehenden Ansprüche, wobei die Vorrichtung (1) ein Gehäuse (20) zum Aufnehmen mindestens der Kammer (10) umfasst.

9. Vorrichtung (1) nach Anspruch 9, wobei das Gehäuse (20) eine Basis (21) und eine Oberseite (22) umfasst und wobei die Kammer (10) derart angeordnet ist, dass die Öffnung (13) an der Oberseite (22) des Gehäuses (20) angeordnet ist.

10. Vorrichtung (1) nach einem der vorstehenden Ansprüche, wobei der Kaffeehäutchensammler (50) abnehmbar angeordnet ist.

11. Vorrichtung (1) nach einem der vorstehenden Ansprüche, ferner umfassend eine Vorrichtung zum Erzeugen eines Luftstroms innerhalb der Kammer (10), z. B. zum Rösten und/oder Kühlen der durch die Kammer (10) aufgenommenen Kaffeebohnen, wobei die Vorrichtung vorzugsweise derart angeordnet ist, dass der Luftstrom die Kaffeehäutchen der Kaffeebohnen derart in Richtung des Kaffeehäutchensammlers (50) treibt, dass die Kaffeehäutchen durch den Kaffeehäutchensammler (50) gesammelt werden.

12. Vorrichtung (1) nach einem der vorstehenden Ansprüche, wobei die Vorrichtung (1) eine Haushaltsgerätvorrichtung ist.

## Revendications

1. Appareil (1) permettant de torréfier des grains de café et de collecter les brisures des grains de café torréfiés, l'appareil (1) comprenant :
une chambre (10) dans laquelle des grains de café peuvent être reçus pour torréfaction, la chambre (10) comprenant une ouverture (13) permettant d'accéder à la chambre (10) afin au moins de retirer les grains de café de la chambre (10), et
un collecteur de brisures (50) permettant de collecter les brisures des grains de café, qui sont torréfiés par la chambre (10),
dans lequel le collecteur de brisures (50) est agencé de façon mobile par rapport à un axe de mouvement spécifique afin d'être déplacé entre une position fermée, dans laquelle le collecteur de brisures (50) couvre l'ouverture (12) de la chambre (10) pour la torréfaction des grains de café, et une position ouverte, dans laquelle le collecteur de brisures (50) ne couvre pas l'ouverture (12) de la chambre (10) de sorte que la chambre (10) est accessible par l'intermédiaire de l'ouverture (12) pour retirer des grains de café de la chambre (10),
dans lequel l'axe de mouvement s'étend dans une direction verticale, l'ouverture (13) est agencée pour accéder à la chambre (10) le long de la direction verticale, l'axe de mouvement est un axe de mouvement de rotation de sorte qu'un mouvement de rotation autour de l'axe de mouvement déplace le collecteur de brisures (50) entre la position fermée et la position ouverte.

2. Appareil (1) selon l'une quelconque des revendications précédentes, dans lequel le collecteur de brisures (50) est agencé de façon mobile par rapport à un seul axe de mouvement spécifique.

3. Appareil (1) selon l'une quelconque des revendications précédentes, l'appareil (1) comprenant en outre un réceptacle (14), le réceptacle (14) comprenant la chambre (10).

4. Appareil (1) selon la revendication 4, dans lequel le réceptacle (14) comprend une poignée (16) permettant de manipuler manuellement le réceptacle (14) et ainsi, de préférence, détacher le réceptacle (14) de l'appareil (1), la poignée (16) comprenant de préférence un matériau avec une faible conductivité thermique.

5. Appareil (1) selon la revendication 4 ou 5, dans lequel le réceptacle (14) est agencé de telle sorte qu'en détachant le réceptacle (14) de l'appareil (1) le collecteur de brisures (50) peut être déplacé ou poussé dans la position ouverte.

6. Appareil (1) selon l'une quelconque des revendications précédentes, l'appareil (1) comprenant un mécanisme de verrouillage (70) conçu pour verrouiller ou déverrouiller sélectivement le collecteur de brisures (50) par rapport à la chambre (10) de telle sorte que, lorsque le collecteur de brisures (50) est verrouillé par rapport à la chambre (10), le collecteur de brisures (50) est empêché de passer de la position fermée à la position ouverte.

7. Appareil (1) selon la revendication 7, dans lequel le collecteur de brisures (50) est agencé pour passer automatiquement dans une position intermédiaire, lorsque le mécanisme de verrouillage (70) est actionné pour déverrouiller le collecteur de brisures (50) par rapport à la chambre (10), dans lequel dans la position intermédiaire l'ouverture (13) est moins couverte par le collecteur de brisures (50) que dans la position fermée.

8. Appareil (1) selon l'une quelconque des revendications précédentes, l'appareil (1) comprenant un logement (20) destiné à loger au moins la chambre (10).

9. Appareil (1) selon la revendication 9, dans lequel le logement (20) comprend une base (21) et une partie supérieure (22), et dans lequel la chambre (10) est agencée de telle sorte que l'ouverture (13) est agencée au niveau de la partie supérieure (22) du logement (20).

10. Appareil (1) selon l'une quelconque des revendications précédentes, dans lequel le collecteur de brisures (50) est agencé de façon détachable.

11. Appareil (1) selon l'une quelconque des revendications précédentes, comprenant en outre un dispositif permettant de générer un courant d'air à l'intérieur de la chambre (10), par exemple pour la torréfaction et/ou le refroidissement des grains de café reçus par la chambre (10), le dispositif étant de préférence agencé de telle sorte que le courant d'air entraîne les brisures des grains de café en direction du collecteur de brisures (50) de telle sorte que les brisures sont collectées par le collecteur de brisures (50).

12. Appareil (1) selon l'une quelconque des revendications précédentes, l'appareil (1) étant un appareil électroménager.
